# FASCICULE DE BREVET EUROPEEN

(11) **EP 0 494 125 B1**
(45) Date de publication et mention de la délivrance du brevet: **16.03.1994**
(21) Numéro de dépôt: 92400009.4
(22) Date de dépôt: 03.01.1992
(51) Int. Cl.: A01M 7/00

(54) **Appareillage de traitement du sol ou de la végétation, comprenant une rampe pouvant pivoter par rapport à des axes longitudinal et transversal**
Boden- oder Vegetationsbehandlungsvorrichtung, mit einer um longitudinale und transversale Achsen schwenkbaren Rampe
Apparatus for the treatment of soil or vegetation, incorporating a ramp which can pivot around longitudinal and transverse axes

(30) Priorité: 04.01.1991 FR 9100079
(43) Date de publication de la demande: 08.07.1992
(73) Titulaire: Société anonyme dite: TECNOMA, 51206 Epernay (FR)
(72) Inventeur: Ballu, Patrick, Jean-Marie, F-51100 Reims (FR)
(74) Mandataire: Colas, Jean-Pierre

(56) Documents cités:
- EP-A- 0 085 597
- EP-A- 0 343 547
- FR-A- 2 559 686
- US-A- 2 770 493
- US-A- 4 138 063

## Description

La présente invention est relative à un appareillage de traitement du sol ou de la végétation, comprenant un véhicule porteur équipé d'un bâti fixe par rapport audit véhicule, et une rampe équipée de moyens de traitement du sol ou de la végétation et disposée sensiblement suivant une disposition parallèle au sol et perpendiculaire à la direction de marche du véhicule.

Par traitement du sol ou de la végétation, on entend l'ensemble de techniques agricoles, y compris par exemple les semis.

L'évolution de la technique agricole a conduit à une augmentation importante de la dimension des rampes des appareillages de pulvérisation ou autres, la longueur de cette rampe pouvant atteindre jusqu'à 40 mètres. Divers problèmes résultent de cette grande dimension, et du fait que, d'une part, le véhicule ne se déplace pas sur un sol horizontal dans son ensemble, et que, d'autre part, les irrégularités locales de la surface du sol font que le véhicule, au cours de son déplacement, est animé de mouvements brusques qui peuvent être considérés comme des pivotements autour d'un axe parallèle à la direction de marche, direction qu'on appellera dans la suite "longitudinale", autour d'un axe selon une direction perpendiculaire à la surface du sol, qu'on appellera dans la suite "direction verticale", et autour d'un axe ayant une direction parallèle à la surface du sol et perpendiculaire à la direction de la marche, qu'on appellera dans la suite "direction transversale".

Les mouvements les plus gênants sont les mouvements de pivotement autour de l'axe longitudinal, et on connaît depuis longtemps des suspensions, par exemple du type "pendulaire", ou du type "à biellettes" qui permettent de maintenir la rampe parallèle à la surface du sol lors des mouvements brusques du véhicule autour de l'axe longitudinal. De telles suspensions sont souvent associées à des moyens de réglage, à commande manuelle ou automatique, destinés à fixer au mieux la hauteur de la rampe, jusqu'à ses extrémités, au-dessus de la surface du sol, de façon à réduire le risque qu'une des extrémités de la rampe vienne en contact avec le sol, et risque d'être endommagée.

Les travaux faits pour limiter les conséquences des mouvements de pivotement autour d'un axe vertical, ou de "lacet", et autour d'un axe transversal, ou de "tangage", ont été beaucoup plus limités. Un mouvement de lacet crée des risques faibles d'endommager la rampe par contact avec le sol, en revanche il peut entraîner, au niveau des extrémités de la rampe, des sur-concentrations et sous-concentrations du produit de traitement répandu sur le sol, par exemple. En outre, il fait subir des efforts importants aux articulations qui relient entre eux les tronçons successifs de la rampe et aux moyens pour maintenir ces tronçons en ligne.

Un mouvement de tangage peut avoir des conséquences analogues, du fait que la rampe, n'étant plus maintenue dans un plan vertical, s'incline sous l'effet de son poids et de sa flexibilité vers l'avant ou vers l'arrière, ce qui peut également entraîner des sur-concentrations et sous-concentrations du produit de traitement et des efforts excessifs de flexion et torsion à l'endroit des liaisons entre les tronçons successifs de la rampe. Par ailleurs, si le sol est montant ou descendant dans le sens du trajet du véhicule, ou bien lors de brusques accélérations ou décélérations du véhicule porteur, il peut en résulter un travail anormal de la structure de la rampe, amenée à fléchir sous l'effet de son poids et de sa flexibilité, de la manière qu'on a dit plus haut. Pour éviter les risques de rupture, on est amené à augmenter la résistance de la rampe aux efforts de flexion et torsion, d'où une augmentation indésirable de son poids et de son prix.

On pourrait songer, d'une façon simple, à supprimer ces inconvénients en remplaçant, dans les suspensions dites pendulaires classiques, les articulations à axe longitudinal par des rotules, permettant des déplacements dans toutes les directions. Cette solution se révèle en fait inopérante, du fait que l'importance des déplacements angulaires qu'on peut tolérer et qu'on doit compenser n'est pas la même autour des axes longitudinal, transversal ou vertical.

En ce qui concerne la limitation des conséquences du lacet, on peut citer le brevet EP-A-0.343.547 qui décrit un dispositif dans lequel la rampe est reliée au véhicule par l'intermédiaire d'une barre de torsion verticale, qui permet des oscillations de lacet autour d'un axe vertical, tout en procurant une force de rappel vers la situation où la rampe est dans un plan transversal. La barre de torsion est reliée à un pivot longitudinal, qui permet des oscillations autour de l'axe longitudinal. Des moyens d'amortissement sont prévus.

Dans le document FR-A-2.559.686, la barre de torsion de EP-A-0.343.547 est remplacée par un pivot vertical, avec des moyens de rappel élastique.

En ce qui concerne la limitation des effets du tangage, le document EP-A-0 085 597 décrivant un appareillage correspondant au préambule de la revendication 1, au nom de la demanderesse, prévoit que la rampe est suspendue par une rotule à un support lié au châssis, et que des surfaces de roulement et des galets permettent des mouvements de pivotement autour d'un axe longitudinal. En plus, les galets peuvent s'écarter des surfaces de roulement, ce qui permet un pivotement de la rampe autour d'un axe transversal passant par le centre de la rotule, seulement dans une direction. Des moyens élastiques sont prévus pour ramener les galets au contact des surfaces de roulement. Cette disposition procure donc seulement une solution partielle au problème.

La présente invention a pour but de fournir un appareillage qui évite les inconvénients indiqués plus haut, de façon efficace, tout en conservant bien entendu le bénéfice des suspensions de type "pendulaire", "à biellettes" ou autres, de l'art antérieur, avec un matériel robuste et peu coûteux.

L'invention fournit, pour obtenir ce résultat, un appareillage de traitement du sol ou de la végétation conforme à la revendication 1, comprenant un véhicule porteur équipé d'un bâti fixe par rapport audit véhicule, une rampe équipée de moyens de traitement du sol ou de la végétation et disposée sensiblement selon une disposition parallèle au sol et perpendiculaire à la direction de marche du véhicule, et une suspension reliant la rampe au bâti fixe, et comportant des moyens de compensation capables de compenser les déplacements angulaires rapides du véhicule autour d'un axe longitudinal parallèle à la direction de marche pour ramener la rampe à une position moyenne, ladite suspension comprenant un bâti mobile, placé entre lesdits moyens de compensation et le bâti fixe et qui porte lesdits moyens de compensation, ce bâti mobile étant relié au bâti fixe par une articulation permettant le pivotement autour d'un axe transversal ayant une direction parallèle à la surface du sol et perpendiculaire à la direction de la marche, à fin que le centre de gravité de l'ensemble constitué par le bâti mobile, les moyens de compensation et la rampe se trouve, au repos, au-dessous dudit axe transversal, si bien que le poids et l'inertie dudit ensemble tendent à ramener ledit centre de gravité dans un plan vertical ou parallèle à la résultante des forces qui s'exercent sur ledit ensemble, et passant par ledit axe transversal, le pivotement dudit centre de gravité de part et d'autre dudit plan étant permis.

Ainsi, on réalise une sorte de suspension "pendulaire" qui fait osciller la rampe non pas autour d'un axe longitudinal, comme dans la technique antérieure, mais autour d'un axe transversal, les avantages d'une suspension pendulaire de type classique, à axe longitudinal, ou d'une suspension à biellettes oscillant autour d'axes longitudinaux de l'art antérieur, étant bien entendu conservés.

De préférence, il est prévu en outre des moyens élastiques, capables de ramener le centre de gravité de l'ensemble dans ledit plan vertical ou parallèle à la résultante des forces lorsqu'il s'en est écarté par un déplacement rapide. Cette disposition correspond au fait qu'il existe deux types de causes possibles de pivotement de l'ensemble autour de l'axe transversal : une accélération ou un freinage brusque du véhicule porteur, ou encore une variation brusque de la situation de ce véhicule sous l'effet d'une irrégularité de sol, entraînant un déplacement rapide. Une variation progressive de la pente le long du trajet du véhicule entraîne au contraire un déplacement lent. Le premier type de déplacement, s'il n'est pas compensé par des moyens élastiques, peut entraîner des oscillations d'amplitude exagérées, et non désirées.

De préférence aussi, il est prévu des moyens d'amortissement des mouvements de pivotement dudit ensemble autour dudit axe transversal.

Suivant une réalisation intéressante, on combine les moyens élastiques et les moyens d'amortissement dont on vient de parler en prévoyant, entre un élément lié au véhicule porteur, par exemple le bâti fixe, et le bâti mobile, au moins un vérin à double tige, dont les deux chambres sont reliées chacune à une enceinte contenant un gaz sous pression, les deux chambres étant en outre reliées entre elles par un étranglement calibré.

Suivant un mode de réalisation avantageux, les moyens reliant le bâti mobile au bâti fixe permettent en outre le pivotement autour d'un axe vertical, et des moyens élastiques, de préférence associés à des amortisseurs, sont prévus entre le bâti mobile et le bâti fixe ou le vhicule porteur, ces moyens étant disposés pour ramener un plan de référence lié à la rampe dans une orientation transversale quand il s'en est écarté.

On réalise ainsi, en plus de la compensation de la non-verticalité de la rampe, la compensation des phénomènes de "fouettement" dus, en particulier, au fait que la trajectoire du véhicule porteur n'est pas parfaitement rectiligne.

Avantageusement, les moyens élastiques associés à des amortisseurs comprennent au moins un vérin dont les deux chambres sont reliées chacune à une enceinte contenant un gaz sous pression.

Suivant une réalisation intéressante, les moyens de liaison entre le bâti fixe et le bâti mobile comprennent une rotule permettant des pivotements autour des deux axes concourants.

Avantageusement, une pièce montée à rotule ou pivot sur le bâti mobile est astreinte à se déplacer dans une direction longitudinale et lesdits moyens élastiques tendent à ramener le bâti mobile dans une position constante par rapport à ladite pièce, par pivotement autour de l'axe vertical.

On notera que l'emploi d'une rotule permet de réduire les coûts, mais qu'il est possible de prévoir une structure différente, avec une pièce intermédiaire reliée au bâti fixe par un pivot à axe vertical ou à axe transversal, et au bâti mobile par un pivot à axe transversal ou à axe vertical, les axes de ces deux pivots se rencontrant en un même point ou ne se rencontrant pas.

L'invention va être exposée plus en détail à l'aide des figures, parmi lesquelles :

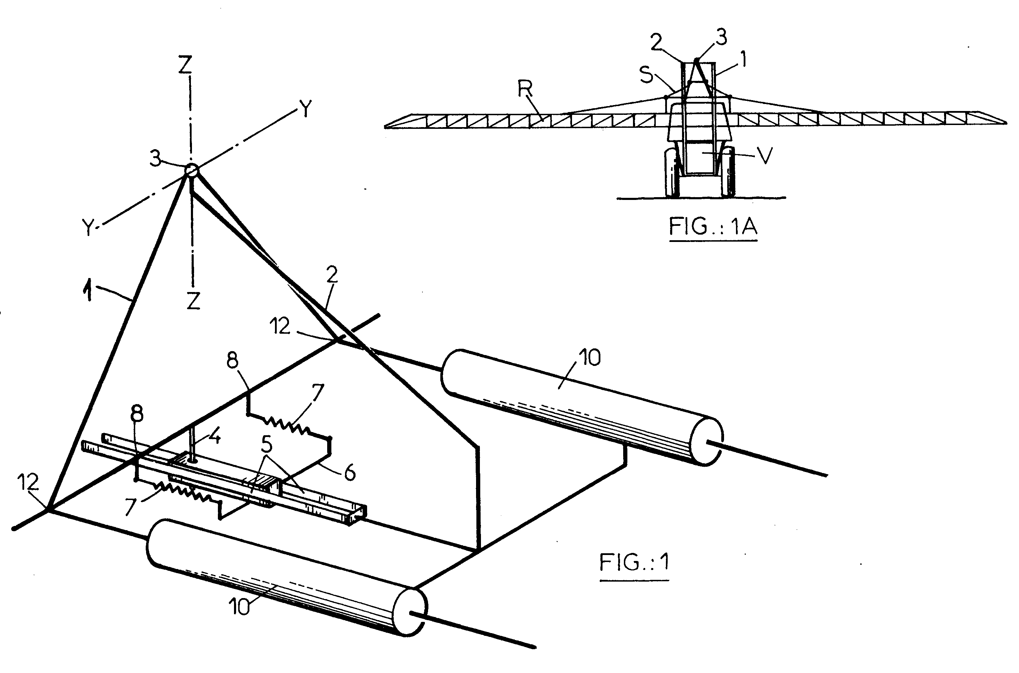

Figure 1A est une vue schématique d'ensemble, d'arrière, d'un véhicule équipé du dispositif de l'invention.

Figure 1 est un schéma en perspective d'une partie du dispositif selon l'invention.

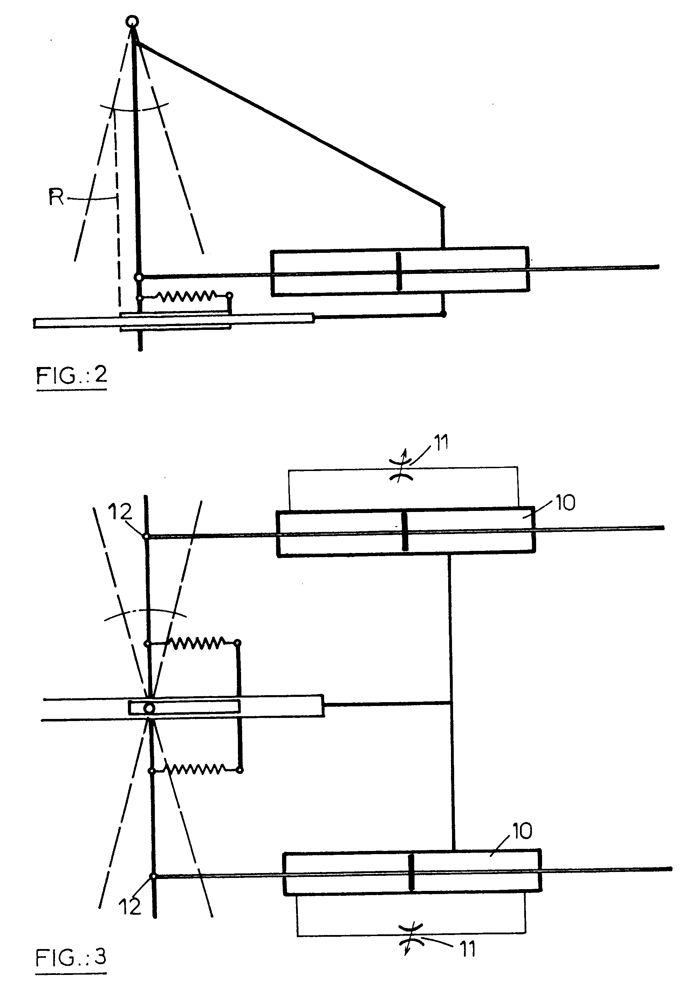

Figure 2 est une vue de côté schématique du même dispositif.

Figure 3 est une vue du dessus schématique du même dispositif.

Figures 4 et 5 sont des vues de côté du dispositif, illustrant la situation lorsque le trajet du véhicule est respectivement montant et descendant.

Figure 6 est une vue schématique du dispositif lors d'un mouvement de lacet du véhicule.

Figure 7 est une vue schématique, correspondant à la figure 6, et illustrant une variante de fabrication.

Figure 8 est une vue de détail de côté en coupe d'une autre réalisation conforme à l'invention.

Figure 9 est une vue de dessus de la réalisation de la figure 8.

Figures 10 et 11 sont des vues schématiques des vérins utilisés dans la réalisation des figures 8 et 9.

Les figures montrent un bâti mobile 1, symbolisé sous la forme d'un triangle vertical, et qui porte, par l'intermédiaire d'une suspension pendulaire ou à biellettes de type connu, non représentée, une rampe de pulvérisation R. Le bâti mobile 1 est, au repos, dans un plan vertical. Il est relié au bâti fixe, schématisé par une barre 2, par l'intermédiaire d'une rotule 3, qui permet des mouvements autour d'un axe transversal YY et d'un axe vertical ZZ. La rotule 3 est située, au repos, à la verticale du centre de gravité de l'ensemble formé du bâti mobile 1, de la rampe R et de la suspension qui les relie. Des mouvements du bâti mobile 1 par rapport à un axe longitudinal seraient, en principe, permis par la rotule 3, mais ils sont empêchés par un dispositif anti-roulis constitué par un coulisseau 4, monté à rotule sur le bâti mobile 1 et qui se déplace entre deux glissières 5 solidaires du véhicule porteur V, et donc du châssis fixe 2, et dirigées longitudinalement.

La rotule 3 peut être remplacée par deux articulations respectivement à axe vertical et transversal, situées toutes deux sur la verticale du centre de gravité de l'ensemble bâti mobile-rampe-suspension, et au-dessus de ce centre de gravité.

Un autre dispositif anti-roulis, par exemple constitué d'une tringlerie appropriée, pourrait être utilisé, l'essentiel étant que le bâti mobile 1 ne présente pas d'oscillation autour d'un axe longitudinal. On se rappelle que les oscillations longitudinales sont prises en charge par le système pendulaire ou à biellettes classique, situé entre la rampe et le bâti mobile 1. Une des extrémités du coulisseau 4 est solidaire du bâti mobile 1. L'autre extrémité de ce coulisseau est reliée par l'intermédiaire d'une tringle transversale 6 et de deux ressorts 7 à deux points 8 du bâti mobile, situés à peu près dans le plan horizontal du coulisseau 4, mais écartés du plan vertical de celui. La tringle 6 et les ressorts 7 constituent un dispositif de rappel, qui ramène le plan du bâti mobile 1 dans une direction transversale lorsqu'il s'en est écarté par pivotement autour de l'axe vertical ZZ, comme cela est bien visible à la figure 6.

Dans la variante présentée à la figure 7, la tringle 6 et les deux ressorts 7 sont remplacés par des ressorts 9 disposés obliquement entre l'extrémité du coulisseau 4 et les points 8 du bâti mobile. Les ressorts 7, 9 sont avantageusement des ressorts à gaz.

La position des points 8 sur le bâti mobile peut varier, à condition qu'ils soient de part et d'autre de l'axe ZZ.

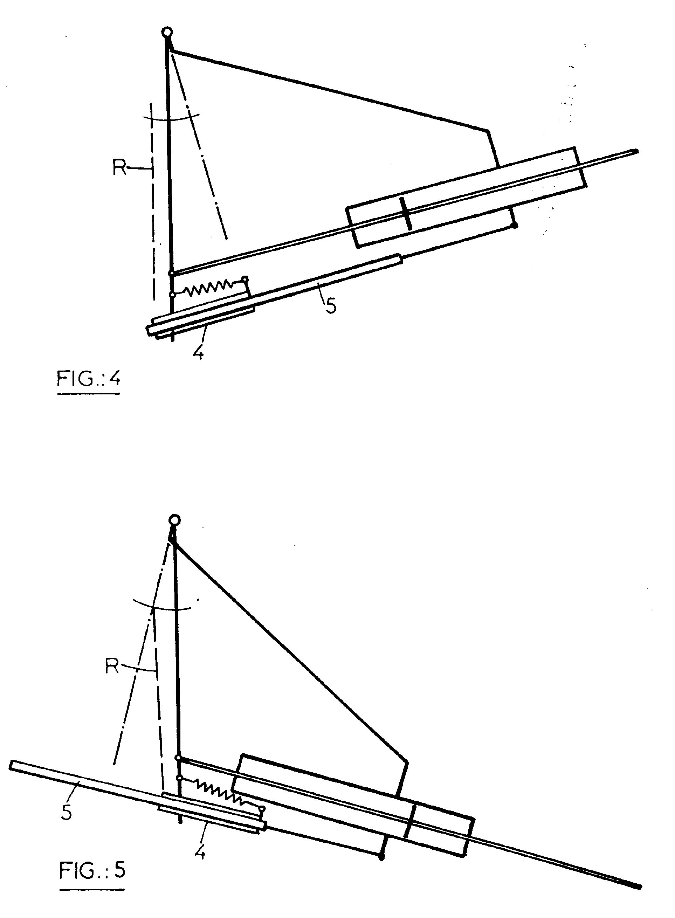

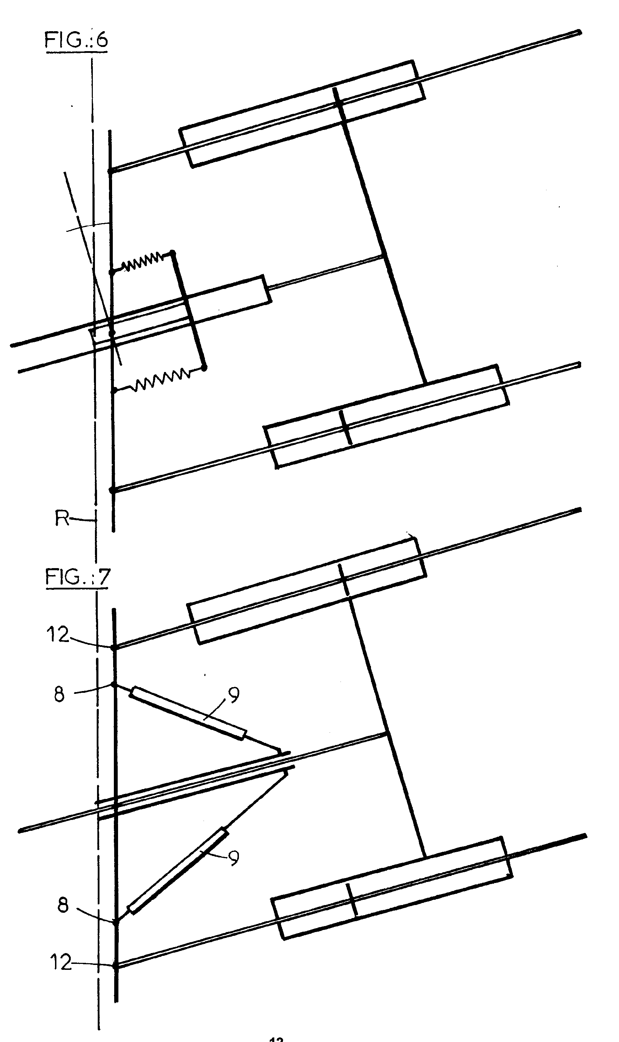

Des amortisseurs 10, formés de vérins à double tige, c'est-à-dire dans lesquels la pression interne ne tend pas à déplacer le piston dans un sens ou dans l'autre, et qui comportent un passage étranglé 11 reliant les deux chambres, sont placés entre le véhicule porteur, non représenté, ou le bâti fixe 2, et des points 12 du bâti mobile qui sont écartés l'un de l'autre dans le sens horizontal. Ces vérins sont destinés à amortir les mouvements d'oscillation du bâti mobile, d'une part, autour de l'axe transversal YY, et dans ce cas, les deux amortisseurs agissent tous les deux dans le même sens, comme montré aux figures 4 et 5, et aussi dans le cas de pivotements autour de l'axe vertical ZZ, c'est-à-dire au cours de mouvements de lacet, comme indiqué aux figures 6 et 7. Dans ce cas, les deux amortisseurs agissent chacun en sens opposés.

La position des points 12 peut varier, à condition qu'ils soient de part et d'autre de l'axe vertical ZZ et écartés de l'axe transversal YY.

La disposition qu'on vient de décrire a les effets suivants : lors d'un mouvement de lacet, c'est-à-dire de pivotement autour d'un axe vertical, le cadre mobile 1, et par conséquent la rampe, sont ramenés automatiquement, par oscillations amorties, dans une direction transversale par rapport à la direction générale de déplacement du véhicule. Sous l'effet du poids du bâti mobile portant la rampe, le centre de gravité de l'ensemble formé de la rampe et du bâti mobile tendant à venir constamment à la verticale de la rotule 3 qui est placée au-dessus de ce centre de gravité, la rampe tend toujours à se placer dans un plan vertical, soit après un mouvaient de tangage plus ou moins rapide, soit lorsque le véhicule suit un trajet ascendant ou descendant.

On le voit, le bâti mobile s'oriente par rapport au véhicule dans le sens du pivotement autour d'un axe vertical, et par rapport à la verticale du lieu lors d'un pivotement autour d'un axe transversal.

On obtient ainsi le rendement optimal de la rampe de pulvérisation.

On a décrit ci-dessus un appareillage où le bâti mobile revient automatiquement à sa position moyenne, sous l'effet des ressorts 7 ou 9, pour les pivotements autour de l'axe vertical, ou sous l'effet de la pesanteur pour les pivotements autour de l'axe transversal. On peut agir sur l'amortissement en modifiant les caractéristiques de l'étranglement 11 des vérins.

On peut aussi utiliser des automatismes actifs pour le pilotage du bâti mobile.

Par exemple, on peut agir contre le fouettement, en plaçant un accéléromètre à chaque extrémité de rampe. Une différence d'accélération, par l'intermédiaire d'une électronique, agit sur deux servovalves, qui commandent les vérins.

Dans un second exemple, qui peut se combiner avec le premier, une mesure de pente (pendule, niveau) agit aussi sur les servovalves pour replacer la rampe dans un plan vertical.

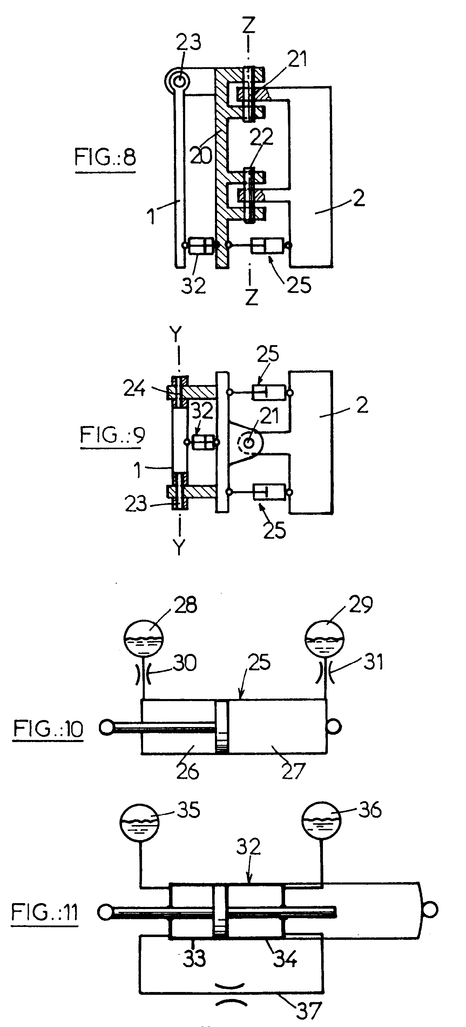

Les figures 8 et 9 montrent une réalisation dans laquelle la rotule 3 est remplacée par un ensemble comprenant une pièce intermédiaire 20 qui est reliée au bâti fixe 2 par une articulation à axe vertical ZZ constituée par deux pivots coaxiaux 21, 22. La pièce intermédiaire 20 est reliée au bâti mobile 1 par une articulation à axe transversal YY constituée par deux pivots coaxiaux 23, 24, les articulations 21, 22 et 23, 24 pouvant être permutées.

Le coulisseau 4 et les glissières 5 peuvent être supprimés du fait que les articulations permettent seulement des pivotements autour des axes YY et ZZ.

Deux vérins stabilisateurs 25 sont montés entre le bâti fixe 2 et la pièce intermédiaire 20. Leur structure est montrée schématiquement à la figure 9. Une enceinte cylindrique remplie de liquide est divisée par le piston en deux chambres 26, 27 reliées chacune à une enceinte 28, 29 contenant un gaz séparé du liquide par une membrane. Les conduits 30, 31, qui relient les chambres 26, 27 aux enceintes 28, 29, ont une section étranglée. On conçoit que l'ensemble agit comme un ressort associé à un amortisseur pour ramener la pièce intermédiaire 20, et par conséquent la rampe, dans une position transversale par rapport au véhicule porteur quand elle en a été écartée.

Un vérin d'un autre type 32 est placé entre la pièce intermédiaire 20 et le bâti mobile 1. Ce vérin, rempli de liquide, est divisé en deux chambres 33, 34 par un piston à double tige. Les deux chambres 33, 34 sont reliées chacune à une enceinte 35, 36 contenant un gaz séparé du liquide par une membrane. En outre, une conduite 37, qui présente un étranglement, relie entre elles les deux chambres. La conduite 37 a été représentée extérieure à l'enceinte du vérin, elle peut bien entendu être remplacée par un passage étranglé prévu dans l'épaisseur du piston.

On conçoit que l'ensemble se comporte comme un ensemble ressort-amortisseur en cas de mouvement brusque, mais qu'un déplacement lent, sous l'effet de la gravité, amène le piston, et par conséquent la rampe, dans une position d'équilibre indépendante de la situation de la pièce intermédiaire 20 et donc du véhicule porteur, par rapport à la verticale. Le vérin 32 est, en fait, de même type que les amortisseurs 10 décrits plus haut.

## Revendications

1. Appareillage de traitement du sol ou de la végétation, comprenant un véhicule porteur (V) équipé d'un bâti fixe (2) par rapport audit véhicule, une rampe (R) équipée de moyens de traitement du sol ou de la végétation et disposée sensiblement selon une disposition parallèle au sol et perpendiculaire à la direction de marche du véhicule, et une suspension (S) reliant la rampe au bâti fixe,
et comportant des moyens de compensation capables de compenser les déplacements angulaires rapides du véhicule autour d'un axe longitudinal parallèle à la direction de marche pour ramener la rampe à une position moyenne,
ladite suspension comprenant un bâti mobile (1), placé entre lesdits moyens de compensation et le bâti fixe et qui porte lesdits moyens de compensation, caractérisé en ce que le bâti mobile est relié au bâti fixe par une articulation (3, 23-24) permettant le pivotement autour d'un axe transversal (YY) ayant une direction parallèle à la surface du sol et perpendiculaire à la direction de la marche,
à fin que le centre de gravité de l'ensemble constitué par le bâti mobile, les moyens de compensation et la rampe se trouve, au repos, au-dessous dudit axe (YY), si bien que le poids et l'inertie dudit ensemble tendent à ramener ledit centre de gravité dans un plan vertical ou parallèle à la résultante des forces qui s'exercent sur ledit ensemble, et passant par ledit axe transversal (YY),
le pivotement dudit centre de gravité de part et d'autre dudit plan étant permis.

2. Appareillage selon la revendication 1, caractérisé en ce qu'il est prévu en outre des moyens élastiques, capables de ramener le centre de gravité de l'ensemble dans ledit plan vertical ou parallèle à la résultante des forces lorsqu'il s'en est écarté par un déplacement rapide.

3. Appareillage selon la revendication 1 ou 2, caractérisé en ce qu'il est prévu des moyens d'amortissement (10,11) des mouvements de pivotement dudit ensemble autour dudit axe (YY).

4. Appareillage selon la revendication 2 ou 3, caractérisé en ce qu'il est prévu, entre le bâti fixe ou le véhicule porteur et le bâti mobile, au moins un vérin (10) à double tige, dont les deux chambres sont reliées chacune à une enceinte contenant un gaz sous pression, les deux chambres étant en outre reliées entre elles par un étranglement calibré (11).

5. Appareillage selon l'une des revendications 1 à 4, caractérisé en ce que l'articulation reliant le bâti mobile au bâti fixe permet en outre le pivotement autour d'un axe vertical (ZZ), et en ce que des moyens élastiques (7,9) sont prévus entre le bâti mobile et le bâti fixe ou le véhicule porteur, ces moyens étant disposés pour ramener un plan de référence lié à la rampe dans une orientation transversale quand il s'en est écarté.

6. Appareillage selon la revendication 5, caractérisé en ce que lesdits moyens élastiques sont associés à des amortisseurs.

7. Appareillage selon la revendication 6, caractérisé en ce que les moyens élastiques associés à des amortisseurs comprennent au moins un vérin (25) dont les deux chambres (26,27) sont reliées chacune à une enceinte (28,29) contenant un gaz sous pression.

8. Appareillage selon l'une des revendications 5 à 7, caractérisé en ce que l'articulation reliant le bâti fixe au bâti mobile comprend une rotule (3) permettant des pivotements autour des deux axes concourants (YY, ZZ).

9. Appareillage selon la revendication 8, caractérisé en ce qu'une pièce (4) montée à rotule ou à pivot sur le bâti mobile (1) est astreinte à se déplacer dans une direction longitudinale, et en ce que lesdits moyens élastiques (7, 9) tendent à ramener le bâti mobile dans une position constante par rapport à ladite pièce, par pivotement autour de l'axe vertical.

## Claims

1. Apparatus for treating soil or vegetation, comprising a carrier vehicle (V) equipped with a support frame (2) stationary in relation to said vehicle, a boom (R) equipped with means for treating the soil or the vegetation and disposed substantially according to a disposition parallel to the soil and perpendicular to the direction of travel of the vehicle, and a suspension (S) placed between the boom and the stationary support frame, and comprising compensation means capable of compensating for the rapid angular motions of the vehicle about a longitudinal axis parallel to the direction of displacement in order to bring the boom back to a mean position, and in order to fix said mean position, in which said suspension comprises a movable support frame (1) placed between the said compensation means and the stationary support frame and which carries the said compensation means,
characterized in that the movable support frame is connected to the stationary support frame via a hinged connection (3, 23-24) which permit pivoting movement about a transverse axis (YY) having a direction parallel to the ground surface and perpendicular to the direction of displacement, so that the center of gravity of the assembly constituted by the movable support frame, the compensation means and the boom is located, at rest, below said transverse axis (YY), such tha the weight and the inertia of said assembly tend to bring said center of gravity back into a plane which is vertical or parallel to the resultant of the forces which are exerted on said assembly and passing through said transverse axis (YY), a pivoting of the said center of gravity on both sides of the said plane being possible.

2. Apparatus according to claim 1, furthermore comprising elastic means capable of bringing the center of gravity of the assembly back into said plane vertical or parallel to the resultant of the forces when it has moved away from it by means of a rapid motion.

3. Apparatus according to claim 1 or 2, comprising means (10, 11) for damping the pivoting movements of said assembly about said axis (YY).

4. Apparatus according to claim 2 or 3 in which there is provided, between the carrier vehicle and the movable support frame, at least one double-rod actuating cylinder (10), the two chambers of which are each connected to a vessel containing a pressurized gas, the two chambers being furthermore connected to each other via a calibrated restritor (11).

5. Apparatus according to anyone of claims 1 to 4, in which the linkage means connecting the movable support frame to the stationary support frame furthermore permit pivoting about a vertical axis (ZZ), and elastic means (7, 9) are provided between the movable support frame and the stationary support frame or the carrier vehicle, these means being disposed in order to bring a reference plane fixed relative to the boom back into a transverse orientation when it has moved away from it.

6. Apparatus according to claim 5, in which said elastic means are associated with dampers.

7. Apparatus according to claim 6, in which the elastic means associated with dampers comprise at least one actuating cylinder (25), the two chambers (26, 27) of which are each connected to a vessel (28, 29) containing a pressurized gas.

8. Apparatus according to anyone claims 5 to 7, in which the linkage means between the stationary support frame and the movable support frame comprise a ball joint (3) permitting pivoting movements about the two coincident axes (YY, ZZ).

9. Apparatus according to claim 8, in which a part (4) attached by a ball joint or by a pivot joint to the movable support frame (1) is obliged to move in a longitudinal direction, and said elastic means (7, 9) tend to bring the movable support frame back into a constant position in relation to said part by pivoting about the vertical axis.

## Patentansprüche

1. Vorrichtung zur Behandlung des Bodens oder der Vegetation mit einem Trägerfahrzeug (V), das mit einem in bezug auf das Fahrzeug festen Rahmen (2) versehen ist, einer Rampe (R), die Einrichtungen zur Behandlung des Bodens oder der Vegetation aufweist und parallel zum Boden sowie senkrecht zur Fahrtrichtung des Fahrzeuges angeordnet ist, und einer Aufhängung (S), die die Rampe mit dem festen Rahmen verbindet und Kompensationseinrichtungen aufweist, die in der Lage sind, rasche Winkelverschiebungen des Fahrzeuges um eine parallel zur Fahrtrichtung verlaufende Längsachse zu kompensieren, um die Rampe in eine mittlere Position zurückzubringen, wobei die Aufhängung einen beweglichen Rahmen (1) aufweist, der zwischen den Kompensationeinrichtungen und dem festen Rahmen angeordnet ist und die Kompensationseinrichtungen trägt, dadurch gekennzeichnet, daß der bewegliche Rahmen mit dem festen Rahmen über ein Gelenk (3, 23-24) verbunden ist, das eine Schwenkbewegung um eine Querachse (YY) ermöglicht, die sich in einer Richtung parallel zur Bodenoberfläche und senkrecht zur Fahrtrichtung erstreckt, so daß der Schwerpunkt der durch den beweglichen Rahmen, die Kompensationseinrichtungen und die Rampe gebildeten Einheit im Ruhezustand unter dieser Achse (YY) liegt, wodurch die Gewichts- und Trägheitskräfte der Einheit dazu neigen, den Schwerpunkt in eine Ebene zurückzuführen, die vertikal oder parallel zu der Resultierenden der Kräfte verläuft, die auf die Einheit einwirken, und die die Querachse (YY) passiert, wobei eine Schwenkbewegung des Schwerpunktes auf beiden Seiten dieser Ebene möglich ist.

2. Vorrichtung nach Anspruch 1, dadurch gekennzeichnet, daß desweiteren elastische Einrichtungen vorgesehen sind, die den Schwerpunkt der Einheit in die vertikale oder parallele zur Resultierenden der Kräfte Ebene zurückbringen können, wenn dieser hiervon durch eine rasche Verschiebung abweicht.

3. Vorrichtung nach Anspruch 1 oder 2, dadurch gekennzeichnet, daß Dämpfungseinrichtungen (10, 11) in bezug auf die Schwenkbewegungen der Einheit um die Achse (YY) vorgesehen sind.

4. Vorrichtung nach Anspruch 2 oder 3, dadurch gekennzeichnet, daß zwischen dem festen Rahmen oder dem Trägerfahrzeug und dem beweglichen Rahmen mindestens ein Arbeitszylinder (10) mit zwei Kolbenstangen vorgesehen ist, dessen beide Kammern jeweils an einen ein unter Druck stehendes Gas enthaltenden Behälter angeschlossen sind, wobei die beiden Kammern ferner über eine kalibrierte Drossel (11) miteinander verbunden sind.

5. Vorrichtung nach einem der Ansprüche 1 bis 4, dadurch gekennzeichnet, daß das den beweglichen Rahmen mit dem festen Rahmen verbindende Gelenk desweiteren eine Schwenkbewegung um eine Vertikalachse (ZZ) ermöglicht und daß elastischen Einrichtungen (7, 9) zwischen dem beweglichen Rahmen und dem festen Rahmen oder dem Trägerfahrzeug vorgesehen sind, wobei diese Einrichtungen dazu dienen, eine der Rampe zugeordnete Bezugsebene wieder in eine Querorientierung zurückzubringen, wenn sie hiervon abgewichen ist.

6. Vorrichtung nach Anspruch 5, dadurch gekennzeichnet, daß die elastischen Einrichtungen mit Stoßdämpfern versehen sind.

7. Vorrichtung nach Anspruch 6, dadurch gekennzeichnet, daß die mit Stoßdämpfern versehenen elastischen Einrichtungen mindestens einen Arbeitszylinder (25) umfassen, dessen beide Kammern (26, 27) jeweils mit einem ein unter Druck stehendes Gas enthaltenden Behältnis (28, 29) verbunden sind.

8. Vorrichtung nach einem der Ansprüche 5 bis 7, dadurch gekennzeichnet, daß das die Verbindung zwischen dem festen Rahmen und dem beweglichen Rahmen herstellende Gelenk ein Kugelgelenk (3) umfaßt, das Schwenkbewegungen um die beiden sich kreuzenden Achsen (YY, ZZ) ermöglicht.

9. Vorrichtung nach Anspruch 8, dadurch gekennzeichnet, daß ein am Kugelgelenk oder am Drehpunkt am beweglichen Rahmen (1) montiertes Element (4) gezwungen ist, sich in einer Längsrichtung zu bewegen, und daß die elastischen Einrichtungen (7, 9) dazu neigen, den beweglichen Rahmen durch Verschwenken um die Vertikalachse wieder in eine konstante Position in bezug auf das Element zurückzubringen.
